# EUROPEAN PATENT APPLICATION

(11) **EP 4 484 745 A1**
(43) Date of publication of application: **01.01.2025**
(21) Application number: 23383070.2
(22) Date of filing: 19.10.2023
(51) Int. Cl.: F03D 7/02

(54) **METHOD FOR OPERATING A WIND TURBINE AND WIND TURBINE**

(30) Priority: 30.06.2023 EP 23382672; 30.06.2023 EP 23382674; 19.07.2023 EP 23382739
(71) Applicant: Nordex Energy Spain, S.A.U., 31395 Barasoain (Navarra) (ES); Nordex Energy SE & Co. KG, 22419 Hamburg (DE)
(72) Inventor: Gellermann, Jan, 22419 Hamburg (DE); Manitz, Jan Erik, 22419 Hamburg (DE); Gil, Pablo, 31395 BARASOAIN (ES)
(74) Representative: Epping - Hermann - Fischer

(57) **Abstract**

The method is for operating a wind turbine (100) having a rotatable component (1 to 4) and at least two drives (di) for rotating the rotatable component by exerting torques. The method comprises a step of providing first information (I1) which is representative of a position setpoint (Pn) of the rotatable component and a step of providing second information (12) which is representative of an operational variable of the wind turbine. In a further step, third information (13) is determined depending on the second information, wherein the third information is representative of which drive is to be operated as a master drive (dm). Thereby, the drive to be operated as the master drive depends on the operational variable. Furthermore, a step is executed in which operating setpoints (OS_i) for the drives are generated depending on the first information and the third information such that, when the drives are operated according to the operating setpoints, the drives bring or keep the rotatable component at the position setpoint by exerting torques. The torques exerted by the drives are at least temporarily different. The operating setpoints are determined such that the value of the torque exerted by the master drive is always greater than or at least equal to the value of the torque exerted by the at least one other drive.

## Description

The present disclosure relates to a method for operating a wind turbine. Furthermore, the disclosure relates to a computer program, a computer-readable data carrier, a control system and a wind turbine.

Wind turbines are widely known and are used to convert wind energy into electrical energy. Some components of the wind turbine, like the nacelle or the rotor blades, need to be rotated during operation, even at extreme conditions, like at high wind speeds.

One object to be achieved is to provide a method which contributes to an increased lifetime of the wind turbine, particularly of the drives for rotating components. Further objects to be achieved are to provide a computer program, a computer-readable data carrier, a control system and a wind turbine for executing such a method.

First, the method for operating a wind turbine is specified.

According to an embodiment, the method is for operating a wind turbine having a rotatable component and at least two drives for rotating the rotatable component by exerting torques. The method comprises a step of providing first information which is representative of a position setpoint of the rotatable component and a step of providing second information which is representative of an operational variable of the wind turbine. In a further step, third information is determined depending on the second information, wherein the third information is representative of which drive is to be operated as a master drive. Thereby, the drive to be operated as the master drive depends on the operational variable. Furthermore, a step is executed in which operating setpoints for the drives are determined depending on the first information and the third information such that, when the drives are operated according to the operating setpoints, the drives bring or keep the rotatable component at the position setpoint by exerting torques. The torques exerted by the drives are at least temporarily different. The operating setpoints are determined such that the value of the torque exerted by the master drive is always greater than or at least equal to the value of the torque exerted by the at least one other drive.

The present invention is, inter alia, based on the recognition that, when a control system for a wind turbine always uses the same drive as the master drive, one or more drives, exert a larger absolute value of the torque when averaged over time than one or more other drives. This is because the wind direction at the location of the wind turbine is not equally distributed over time. Rather, in most of the cases, there is a preferred wind direction. The drive or drives being operated with the larger mean absolute value of the torque are, on average, also operated with larger operating currents and, accordingly, are subject to greater temperatures and larger wear.

In the present invention, the master drive is selected depending on at least one operational variable. Thus, the drive to be operated as the master drive can be changed so that wear is more equally distributed over the drives.

Accordingly, the drives can be used longer and the lifetime of the whole wind turbine can be increased.

The method specified herein is, in particular, a computer implemented method, i.e. is performed with the help of a computer or a processor.

A setpoint herein defines a certain target to be achieved when operating the wind turbine. For example, the position setpoint is the target value of the position of the rotatable component. The operating setpoint defines the target operation of a drive. An operating setpoint for a drive is, in particular, equivalent to control/operation information for the drive.

Herein, when information is representative of a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data.

The drives may each comprise an electric motor. Moreover, each drive may comprise a gearbox and a pinion. The electric motors apply an input rotational speed and an input torque to the gearbox, which is transformed thereby to an output rotational speed and an output torque and is applied to the pinion. By way of example, the transmission ratio between the input rotational speed and the output rotational speed of the gearbox of each drive is at least 100 or at least 1000. That is, on one side of the gearbox the electric motor rotates at least 100 or at least 1000 times faster than the pinion on the other side of the gearbox.

The drives may be attached to the rotatable component so that they rotate together with the rotatable component. For example, the drives then mesh with and exert torques to a non-rotatable element which in turn may cause the rotation of the rotatable component. Alternatively, the drives are rotationally fixed and do not rotate together with the rotational component. The drives may then mesh with and may exert torques to the rotatable component, which can cause its rotation.

The first information is representative of a position setpoint of the rotatable component. The position setpoint is, in particular, an angle between 0° and 360°.

The second information is representative of the operation time of the wind turbine. The operation time is the time for which the wind turbine has been operated so far. It may be the time passed since the first operation of the wind turbine or only the accumulated time over which the wind turbine has produced electric energy.

The third information is representative of which drive is to be operated as a master drive. All other drives except the master drive are forced to exert a value of the torque which is lower than or at most the same as the value of the torque of the master drive. The "value of the torque" can herein either be the numerical value (the real number) or the absolute value (magnitude) of the torque. The numerical value takes into account the sign so that a torque value of 0 Nm is larger than a torque value of -10 Nm, for example.

The third information is determined depending on the second information such that the drive to be operated as the master drive depends on the operational variable. The operational variable could be an operation time, for example. For example, the drive to be operated as the master drive is changed after a certain operation time has passed. The certain operation time may be at least one month and/or at most one year.

The operating setpoints for the drives are determined depending on the first and the third information. Particularly, an operating setpoint is determined for each drive, wherein the operating setpoint assigned to a drive defines the operation of that drive. For each drive, the corresponding operating setpoint may be or may be representative of a current setpoint or a torque setpoint.

The operating setpoints are determined such that, when the drives are operated according to the operating setpoints, the drives bring or keep the rotatable component at the position setpoint by exerting torques. In other words, the operating setpoints are configured to cause an operation of the drives such that the drives bring or keep the rotatable component at the position setpoint by exerting torques. To bring or keep the rotatable component at the position setpoint means that the drives are operated such that the difference between the actual position of the rotatable component and the position setpoint is minimized. In other words, the rotatable component is kept in or brought to a position which corresponds to the position setpoint.

The torques exerted by the drives when the drives are operated with the operating setpoints are at least temporarily, i.e. temporarily or permanently, different from each other. This means that the torques of at least two drives differ from each other, at least for a certain time period. Herein, when torques are different, this means that the torques are set to be different, i.e. they are different on purpose.

For example, at least in the case that no or a low external torque acts on the rotatable component, i.e. if the external torque is below a first threshold value, the drives may be operated with different torques, i.e. with a torque difference between at least two drives. The drives may then be tensioned against each other. The first threshold value may correspond to an average torque exerted by the drives, which is between 30% and 80% or between 30% and 50% of Mmax. For example, the torque difference is then set to be at least 0.01·|Mmax| or at least 0.05·|Mmax|. Mmax is the value of the maximum torque which can be provided by a single drive.

At a higher external torque, e.g. when the external torque is above the first threshold, the drives may all be operated with the same torque (same numerical value of the torque). The external torque is, in particular, torque which is not induced by the drives but torque against which the drives have to fight.

According to a further embodiment, the operational variable is an operation time. It could be the operation time of the whole wind turbine. Alternatively, the operation time could be the time for which a drive has already been operated. For example, the operation time is the time interval, for which the current master drive has already been operated as the master drive. The time interval could be the uninterrupted time for which the current master drive has been operated as the master drive or the accumulated time, i.e. with interruptions, for which the current master drive has been operated as the master drive. If the operation time reaches a certain value, e.g. a predetermined and/or fixed value, the third information is determined such that the drive which is operated as the master drive is changed.

Alternatively, the operational variable could be the ratio of the accumulated time for which the current master drive has been operated as the master drive divided by the accumulated time for which the current master drive has not been the master drive. If this ratio reaches a certain value, e.g. a predetermined and/or fixed value, the third information is determined such that the drive which is operated as the master drive is changed.

According to a further embodiment, the operational variable is an accumulated load or accumulated damage, respectively. Particularly, it may be an accumulated load of a component of the wind turbine, particularly of a component of the yaw system or the pitch system. For example, the operational variable is the accumulated load of one of the drives, e.g. the current master drive. If the accumulated load reaches a threshold, particularly a predetermined threshold, the third information is determined such that the drive which is operated as the master drive is changed.

According to a further embodiment, the operational variable is a remaining lifetime. For example, it is the remaining lifetime of the whole wind turbine or of a component of the wind turbine, particularly of a component of the yaw system or the pitch system. For example, the operational variable is the remaining lifetime of one of the drives, e.g. the current master drive. If the remaining lifetime reaches a threshold, particularly a predetermined threshold, the third information is determined such that the drive which is operated as the master drive is changed.

According to a further embodiment, the operational variable is the time over which a torque has exceeded a threshold. Particularly, the torque is the torque exerted by the current master drive or an external torque acting on the rotatable component. The threshold may be a predetermined threshold. The time over which the threshold has been exceed may be an interrupted or uninterrupted time interval. If the time over which the torque has exceeded the threshold reaches a certain value, e.g. a predetermined value, the third information is determined such that the drive which is operated as the master drive is changed.

"The third information is determined such that the drive to be operated as the master drive is changed" means that another drive will be operated as a master drive after the operational variable has reached the threshold or certain value. The operational variable may be reset when the drive to be operated as the master drive is changed.

According to a further embodiment, the wind turbine comprises at least three drives for rotating the rotatable component. For example, the wind turbine comprises four or more drives, particularly six drives, for rotating the rotatable component.

According to a further embodiment, the third information is determined such that the three drives alternatingly become the master drive. For example, between each change of the master drive, a time of at least one month and/or at most one year passes. Particularly, the third information is determined such that each of the drives becomes the master drive at least once.

According to a further embodiment, the master drive is changed every time a fixed time interval has passed. The fixed time interval is, for example, a time interval between one month and one year, e.g. a time interval of half a year.

According to a further embodiment, the method comprises a step of providing fourth information which is representative of a torque difference setpoint between the torques exerted by the drives. The torque difference setpoint is the target value of the absolute value of the torque difference between the torques of two drives. In the case of more than two drives, the second information may be representative of several torque difference setpoints. For example, the torque difference setpoint for each drive then refers to the torque difference between the drive and the master drive.

According to a further embodiment, the operating setpoints are determined also depending on the fourth information in order to make the torques exerted by the drives fulfill the torque difference setpoint.

According to a further embodiment, the method comprises a step of providing fifth information. The fifth information is representative of the actual torque difference between the actual torques exerted by the drives. By way of example, the actual electric currents with which the electric motors are actually operated are determined and these currents are then stored in the fifth information. The actual electric currents may be determined from the PWM-signals transmitted to the drives by using a motor model. Indeed, the electric current is proportional to the torque so that the difference between the currents of the electric motors is representative of the difference between the torques. Alternatively, it is possible to measure the torques provided by the drives or the torque difference directly and to store these measurements in the fifth information.

According to a further embodiment, the operating setpoints are determined also depending on the fifth information, e.g. by using a feedback loop, particularly a negative feedback loop, with the fourth and the fifth information as input information so that the difference between the torque difference setpoint and the actual torque difference is minimized. Particularly, the fourth and the fifth information are repeatedly or continuously provided and compared. Depending on this, the operating setpoints are repeatedly or continuously determined or adjusted, respectively, in order to make the actual torque difference to match the torque difference setpoint.

Determining the operating setpoints depending on the fourth and the fifth information by using the feedback loop may be realized with the help of a controller, herein also called "tension controller". The tension controller is, for example, a proportional (P-) controller. For example, depending on the deviation between the actual torque difference and the torque difference setpoint, the tension controller determines at least one actuating variable. The operating setpoints may be representative of this actuating variable and/or may be determined depending on this actuating variable. By being operated according to the operating setpoints, the operation of the drives can then be adjusted according to the actuating variable.

According to a further embodiment, the method comprises a step of providing sixth information which is representative of rotational speed setpoints of the drives. The rotational speed setpoints are the target values of the rotational speeds of the drives for bringing or keeping the rotatable component at the position setpoint. For example, the sixth information is determined depending on the first information. That is, the rotational speed setpoints may be determined depending on the position setpoint.

The "rotational speeds of the drives" herein means, in particular, the rotational speeds as input into the gearboxes, i.e. as provided by the electric motors.

According to a further embodiment, the method comprises a step of providing seventh information which is representative of the actual rotational speeds of the drives. The actual rotational speeds of the drives may be determined with the help of measurements. For example, incremental encoders may be used to measure the rotational speeds of the drives.

According to a further embodiment, the operating setpoints are determined also depending on the sixth and the seventh information. Particularly, the operating setpoints are determined by using further feedback loops with the sixth and the seventh information as input information so that the differences between the actual rotational speeds and the corresponding rotational speed setpoints are minimized. The feedback loops are, in particular, negative feedback loops. For example, the sixth and seventh information are repeatedly or continuously provided and compared. Depending on this, the operating setpoints are determined repeatedly or continuously in order to make the actual rotational speeds match the rotational speed setpoints.

By way of example, each of the drives is assigned a controller, like a PI (proportional-integral) controller, which are herein also called "speed controllers". The speed controllers may then determine, depending on the deviations between the actual rotational speeds and the rotational speed setpoints, actuating variables. The operating setpoints are then, for example, these actuating variables.

According to a further embodiment, the method comprises the step of determining eighth information depending on the fourth and the fifth information. The eighth information is representative of an offset rotational speed and the offset rotational speed depends on the difference between the torque difference setpoint and the actual torque difference. The offset rotational speed is, in particular, a target difference between the rotational speeds of the drives. The greater the difference between the torque difference setpoint and the actual torque difference, the greater the offset rotational speed may be.

Determining the eighth information may be done by the above-mentioned tension controller. By way of example, the offset rotational speed is the actuating variable determined with the tension controller.

According to a further embodiment, the sixth information is determined depending on the eighth information such that the rotational speed setpoint of at least one drive is the rotational speed setpoint of another drive minus the offset rotational speed. By way of example, if the actual torque difference is much smaller than the torque difference setpoint, the offset rotational speed is determined to be comparatively large and, accordingly, the rotational speed setpoints of the drives are much different. On the other hand, if the actual torque difference is equal to the torque difference setpoint, then the offset rotational speed may be smaller or may be zero.

In particular, the offset rotational speed is always subtracted from the rotational speed setpoint of the (current) master drive.

According to a further embodiment, the method comprises a step of providing ninth information which is representative of the actual position of the rotatable component. The ninth information may be determined depending on measurements. For example, the rotational position of the rotatable component is determined with the help of an incremental encoder.

According to a further embodiment, the operating setpoints are determined also depending on the ninth information. For example, this is done by using a further feedback loop, particularly a negative feedback loop, with the first and the ninth information as input information so that the difference between the actual position and the position setpoint is minimized. That is, also the ninth information and, if applicable, the first information may be repeatedly or continuously provided and, accordingly, the operating setpoints are repeatedly or continuously determined and generated depending on the first and the ninth information in order to make the actual position to match the position setpoint.

This feedback loop may be realized with the help of a further controller, herein also referred to as "position controller". Depending on the deviation between the actual position and the position setpoint, the position controller determines actuating variables, wherein the operating setpoints may be determined depending on these actuating variables. The actuating variables are, for example, the rotational speed setpoints.

According to a further embodiment, the rotatable component is a component of a yaw system of the wind turbine. For example, the rotatable component is a nacelle of the wind turbine or a carrier for a nacelle or a yaw bearing.

According to a further embodiment, the rotatable component is a component of a pitch system of the wind turbine. For example, the rotatable component is a rotor blade of the wind turbine or a carrier for a rotor blade or a pitch bearing.

Next, the computer program, the computer-readable data carrier and the control system are specified.

According to an embodiment, the computer program comprises instructions which, when the program is executed by a control system, cause the control system to carry out the method for operating a wind turbine according to any one of the embodiments described herein.

According to an embodiment, the computer-readable data carrier has the computer program stored thereon.

According to an embodiment, the control system comprises means configured to execute the method for operating a wind turbine according to any one of the embodiments described herein. Particularly, the method is carried out when the above-mentioned computer program is executed by the control system.

The control system may comprise at least one processor and/or at least one programmable logic controller, plc for short. Additionally, the control system may comprise one or more drive control modules which convert the operating setpoints into actual electric signals, e.g. PWM signals, with which drives are controlled. The control system may be part of the wind turbine.

According to an embodiment, the control system comprises means with the help of which the actual torque difference between the actual torques exerted by the drives is determinable. The means may be the current sensors of the one or more drive control modules. As mentioned above, the actual torques or actual torque differences can be derived from the electric currents.

Alternatively, the control system may comprise particular means, like sensors, with the help of which the external load and/or the actual torque difference and/or the actual torques are directly determinable.

According to a further embodiment, the control system further comprises means, particularly sensors, with the help of which the actual rotational speeds of the drives are determinable. For example, the control system comprises incremental encoders, particularly one incremental encoder for each drive.

According to a further embodiment, the control system further comprises means, particularly a sensor, with the help of which the actual position of the rotatable component is determinable. For example, the control system comprises an incremental encoder assigned to the rotatable component.

Next, the wind turbine is specified.

According to an embodiment, the wind turbine comprises at least one rotatable component as well as at least two drives which are configured to rotate the rotatable component by exerting torques. The wind turbine further comprises the control system as specified herein. The control system is signally connectable or signally connected to the drives in order to enable an operation of the drives according to the operating setpoints.

Thus, the wind turbine is, in particular, configured to execute the method according to any of the embodiments described herein. When the method is executed, the drives are operated according to the operating setpoints.

The rotatable component of the wind turbine may be a component of the yaw system and/or the pitch system, like the nacelle or a nacelle carrier or a rotor blade or a rotor blade carrier.

Hereinafter, the method for operating a wind turbine, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.
Figure 1 shows an exemplary embodiment of the wind turbine,
Figure 2 shows an exemplary embodiment of a yaw system in a perspective view,
Figure 3 shows an exemplary embodiment of a yaw system in a cross-sectional view,
Figure 4 shows an exemplary embodiment of a yaw system in a top view,
Figure 5 shows a flowchart of an exemplary embodiment of the method for operating a wind turbine,
Figures 6 and 7 show an exemplary embodiment of the control system at two different operation times,
Figures 8 and 9 show an exemplary embodiment of the yaw system during operation with an exemplary embodiment of the method,
Figure 10 shows an exemplary embodiment of an operation of a drive control module.

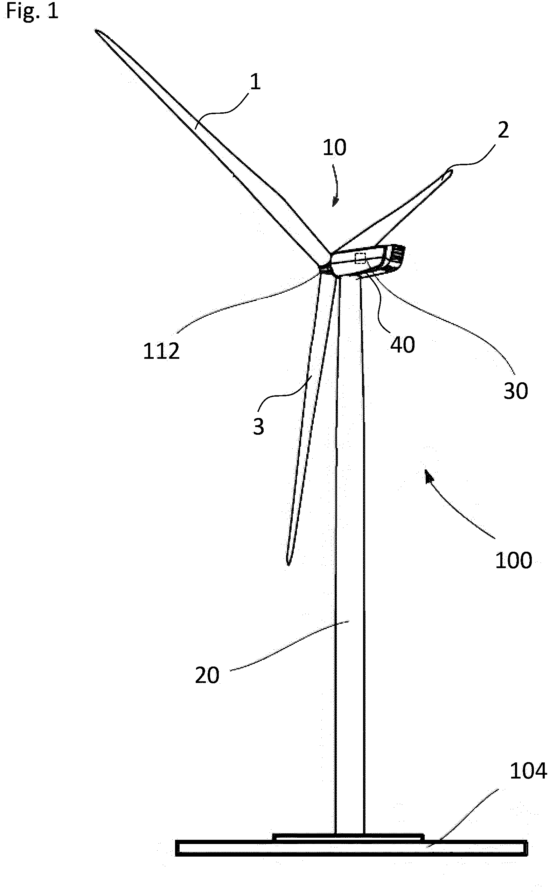

Figure 1 shows a wind turbine 100 which comprises a tower 20. The tower 20 is fixed to the ground by means of a foundation 104. At one end of the tower 20, opposite to the ground, a nacelle 40 is rotatably mounted. The nacelle 40 comprises, for example, a generator which is coupled to a rotor 10 via a gearbox (not shown). The rotor 10 comprises three (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the drive train comprising, inter alia, the rotor shaft and the gearbox. The generator converts the mechanical energy of the rotor 10 into electrical energy.

For optimizing the energy output of the wind turbine 100, the nacelle 40 has to be rotated into the wind. Moreover, the pitch angles of the rotor blades 1, 2, 3 have to be set according to the wind speed. This is done with the help of drives (not shown) which rotate the rotor blades 1, 2, 3 and the nacelle 40 to a respective target position. In order to control and operate the drives, the wind turbine comprises a control system 30 which determines operating setpoints with which the drives are operated. The control system 30 is located in the nacelle 40.

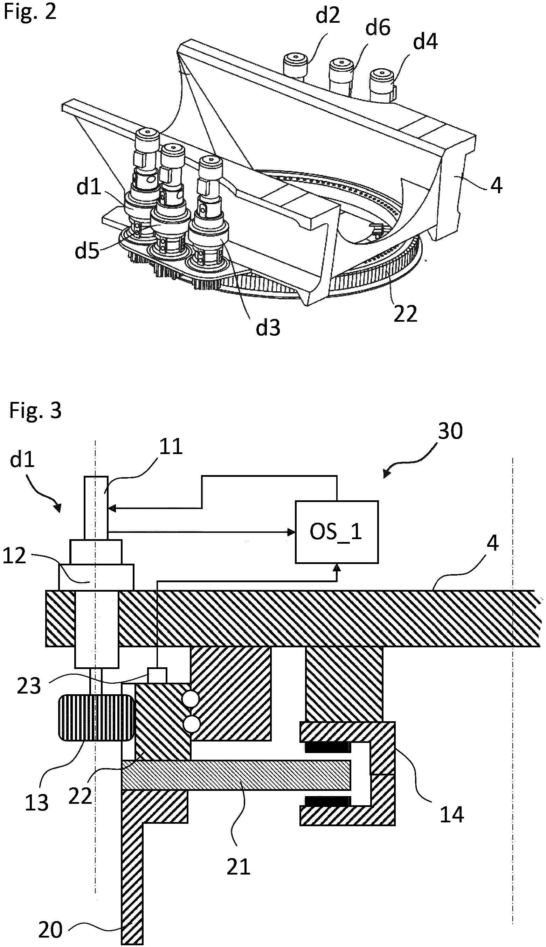

Figure 2 shows a detailed view of an exemplary embodiment of a yaw system, e.g. the yaw system of the wind turbine of figure 1. Here, the nacelle 40 itself is not shown, only the carrier 4 for the nacelle 40. This carrier 4 is rotatable together with the nacelle 40. In order to rotate the carrier 4, six drives d1 to d6 are mounted on the carrier 4. These drives d1 to d6 mesh with a yaw bearing 22 of the yaw system. The yaw bearing 22 is fixed with respect to, for example, the tower 20. The carrier 4 is rotated when the drives d1 to d6 rotate.

Figure 3 shows an exemplary embodiment of the yaw system, e.g. of the yaw system of figure 2, in more detail and in a cross-sectional view. The yaw bearing 22 is mounted on the tower 20. Moreover, a brake disk 21 is mounted to the tower 20. A brake caliper 14 is fixed to the carrier 4 and can be used to stop rotation of the carrier 4 and/or to hold the carrier 4 in position. The brake disk 21 and the brake caliper 14 are optional.

Figure 3 shows only one of the drives, namely drive d1. All other drives may be formed identically. Drive d1 comprises an electric motor 11. The electric motor 11 is operated depending on an operating setpoint OS_1 generated by the control system 30. Depending on the operating setpoint OS_1, drive d1 is rotated and thereby exerts a certain torque. The rotational speed and torque of the electric motor 11 is transmitted to a pinion 13 of the drive d1 with the help of a gearbox 12. The transmission ratio of the gearbox 12 is, for example, at least 100 or at least 500 so that the electric motor 11 rotates much faster than the pinion 13. On the other hand, the torque exerted by the pinion 13 onto the yaw bearing 22 is much larger than the torque provided by the electric motor 11.

In order to determine the actual position of the rotatable carrier 4, the control system 30 comprises an incremental encoder 23. The measurements taken with the help of the incremental encoder 23 are processed by the control system 30. Moreover, another incremental encoder 24 is provided, with the help of which the actual rotational speed of the electric motor 11 of drive d1 is determinable. These measurements are also processed by the control system 30. An individual incremental encoder 24 may be provided for each drive d1 to d6.

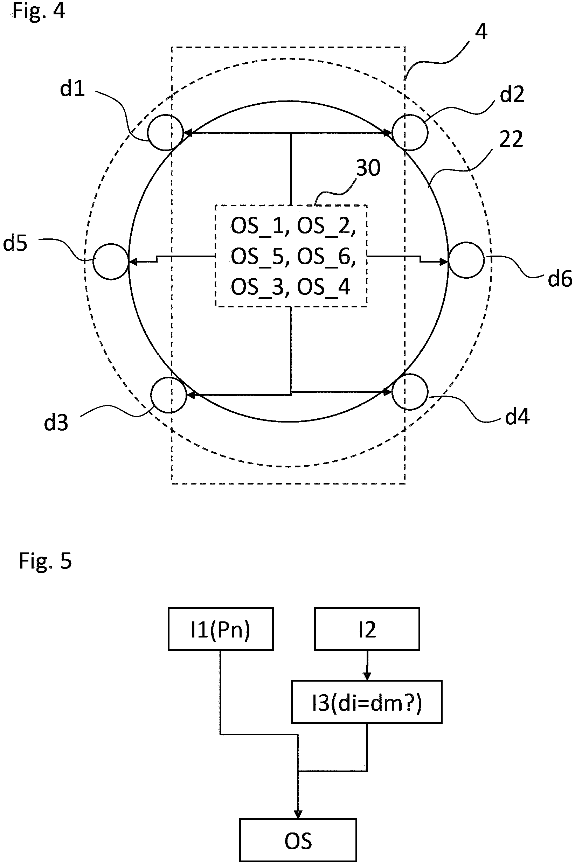

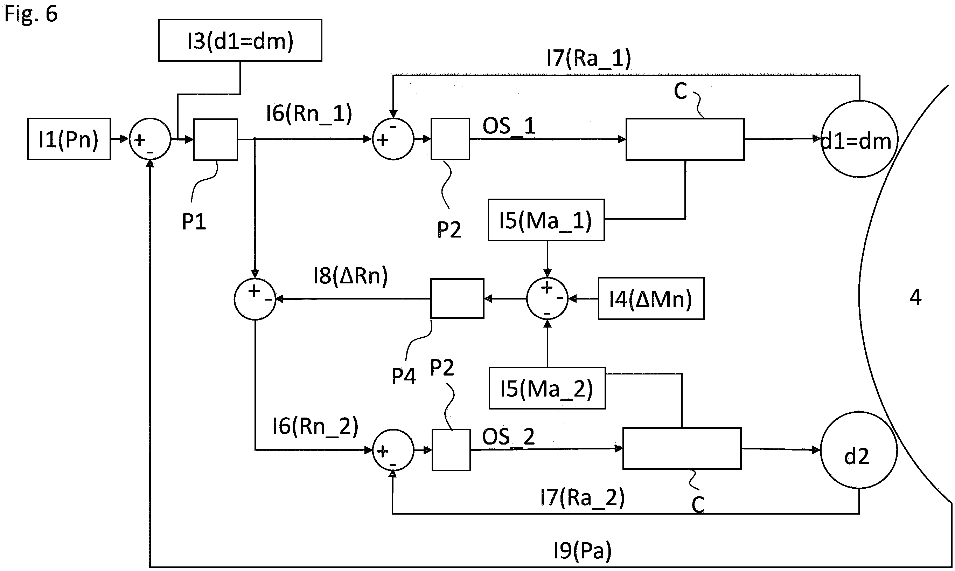

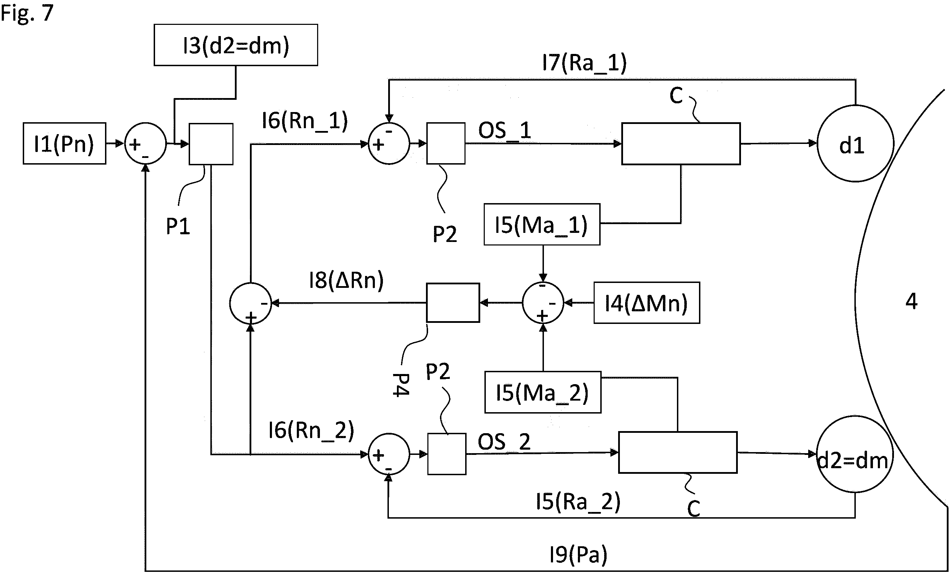

Figure 4 shows an exemplary embodiment of a yaw system, e.g. of the yaw system of figures 2 and 3, in top view. As can be seen here, all six drives d1 to d6 are operated according to corresponding operating setpoints OS_1 to OS_6, OS_i for short, determined with the control system 30. The operating setpoints OS_i may be configured such that different drives d1 to d6, di for short, exert different torques. How this can be achieved is explained in more detail in connection with figures 6 and 7.

A possible way to operate the yaw system of figures 2 to 4 is to group the drives into two groups. The left group or first group, respectively, comprises drives d1, d3 and d5. The right group or second group, respectively, comprises the drives d2, d4 and d6. Drive d1 may be the master drive. The torques exerted by all other drives may be selected depending on the torque exerted by drive d1. For example, drives d3 and d5 are operated such that they always exert the same torque as drive d1. The drives of the right group, i.e. drives d2, d4 and d6, may be operated such that they always exert the same torques, but torques with values, particularly numerical values, which are lower or at most the same as the value, particularly numerical value, of the torque of drive d1. The torques of the left side and of the right side may differ from each other by a torque difference setpoint, e.g. of 10 Nm. Thus, the torques of drives d2, d4 and d6 may be the torques of drives d1, d3 and d5 minus 10 Nm.

A consequence of this is that, when an external torque acts on the carrier 4 against which the drives have to fight and which is different from 0 Nm on average, the drives of the left group, on average, exert a larger absolute value of the torque than the drives of the right group or vice versa. Thus, on average, drives d1, d3 and d5 are operated with larger electrical currents and, accordingly, larger temperatures than the drives d2, d4 and d6 or vice versa. Aging of the left drives with the larger average absolute torque value is faster than of the other drives. This can reduce the lifetime of the whole wind turbine.

Figure 5 shows an exemplary embodiment of the method for operating a wind turbine which addresses this problem. The method is described on the basis of the yaw system but can likewise be applied to the pitch system of the wind turbine.

In the method of figure 5, first information I1 and second information I2 are provided. The first information I1 is representative of a position setpoint Pn of the carrier 4, i.e. a target position of the carrier 4.

The second information I2 is representative of an operational variable, like an operation time of the wind turbine 100 or of a component thereof. For example, it could be the time for which the current master drive has already been operated as the master drive.

In a further step, third information I3 is determined depending on the second information I2. The third information I3 is representative of which drive di is to be operated as a master drive dm, whereby the drive di to be operated as the master drive dm depends on the operational variable. For example, the drive di to be operated as the master drive dm changes when the operation time has reached a certain, predefined value.

Operating setpoints OS_i for the different drives di are then determined depending on the first I1 and the third information 13. The operating setpoints OS_i are determined such that, when the drives di are operated according to the operating setpoints OS_i, the drives di bring or keep the carrier 4 at the position setpoint Pn by exerting torques. The torques exerted by the drives di are at least temporarily different, e.g. at a low external torque acting on the carrier 4. The operating setpoints OS_i are determined such that the value of the torque exerted by the master drive dm is always greater than or at least equal to the value of torque exerted by the at least one other drive di.

By changing the master drive depending on the operational variable, e.g. by changing from a master drive of the left group to a master drive of the right group, the aging of all drives can be made more equal so that the lifetime of the wind turbine can be increased.

Figure 6 shows an exemplary embodiment of the control system 30 with which the described method can be executed. For better illustration, only the drives d1 and d2 are shown.

Figure 6 shows a moment in time when drive d1 is to be operated as the master drive dm. This is stored in the third information 13.

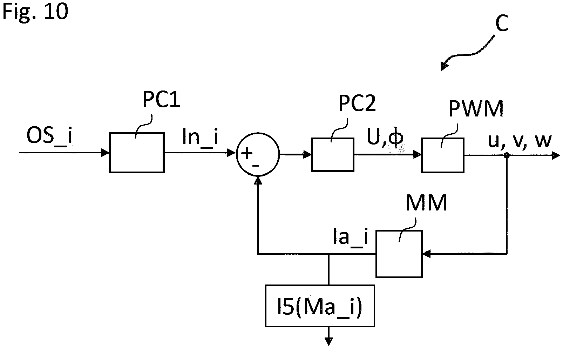

A first information I1, which is representative of a position setpoint Pn of the carrier 4, is provided. Depending on this first information I1, the third information I3 and ninth information I9, a position controller P1 determines sixth information 16. The sixth information I6 is representative of rotational speed setpoints Rn_1 to Rn_6, Rn_i for short, of the drives di. Depending on this sixth information I6, speed controllers P2 determine and generate operating setpoints OS_i, which are, e.g. torque setpoints. Drive control modules C convert the torque setpoints OS_i into actual electric signals with which the drives di are operated so that the drives di bring or keep the carrier 4 at the position setpoint Pn. The drive control modules C are explained in more detail in connection with figure 10.

The ninth information I9 is representative of the actual position Pa of the carrier 4 and can be determined, for example, with the help of the incremental encoder 23 as described in connection with figure 3. The ninth information I9 and the first information I1 are used in a negative feedback loop. From the deviation between the actual position Pa and the nominal Position Pn, the position controller P1 determines the sixth information I6.

Moreover, in order to achieve that the drives di rotate with the rotational speed setpoints Rn_i, seventh information I7 is provided which is representative of the actual rotational speeds Ra_i of the drives di. The seventh information I7 can be determined with the help of the incremental encoders 24, as explained in connection with figure 3. The seventh information I7 is used together with the sixth information I6 in negative feedback loops in order to minimize the respective differences between the rotational speed setpoints Rn_i and the actual rotational speeds Ra_i. The speed controllers P2 determine the operating setpoints OS_i depending on the deviation between the actual rotational speeds Ra_i and the rotational speed setpoints Rn_i.

As mentioned before, the drives d1, d2 may be operated such that they exert different torques. For this purpose, a fourth information I4 is provided which is representative of a torque difference setpoint ΔMn. The torque difference setpoint ΔMn is compared to the actual torque difference ΔMa between the actual torques Ma_i of the drives. The actual torque difference ΔMa can be derived from fifth information I5 which is representative of the actual torques Ma_i of the drives di. The actual torques Ma_i of the drives di can be extracted from drive control modules C used for operating the drives by using the electric signals with which the motors are actually operated.

Depending on the fourth I4 and fifth I5 information, an eighth information I8 is determined using a negative feedback loop. The eighth information I8 is representative of an offset rotational speed ΔRn and is determined with the help of a tension controller P4 depending on the deviation between the actual torque difference and the torque difference setpoint ΔMn. For example, the offset rotational speed ΔRn is determined such that it increases with increasing difference between the torque difference setpoint ΔMn and the actual torque difference.

As can be seen in figure 6, the offset rotational speed ΔRn is subtracted from the rotational speed setepoint Rn_1 determined for drive d1 and the resulting value of the rotational speed is used as the rotational speed setpoint Rn_2 for the drive d2. In this way, a torque difference can be realized between drive d1 and drive d2 in which the value of the torque exerted by the drive d2 is always smaller or at most equal to the value of the torque exerted by drive d1. This is because the drive d1 is operated as the master drive.

In Figure 7, another moment in time is shown, e.g. half a year later. Now the drive d2 is the master drive dm. Again, this is stored in the third information I3. The position controller P1 therefore knows that drive d2 is to be operated as the master drive dm. Accordingly, the offset rotational speed ΔRn is now subtracted from the rotational speed setpoint Rn_2 determined for drive d2 and the resulting value of the rotational speed is used as the rotational speed setpoint Rn_1 for the drive d1. Thus, the value of the torque exerted by drive d1 is now always smaller or at most equal to the value of the torque exerted by drive d2.

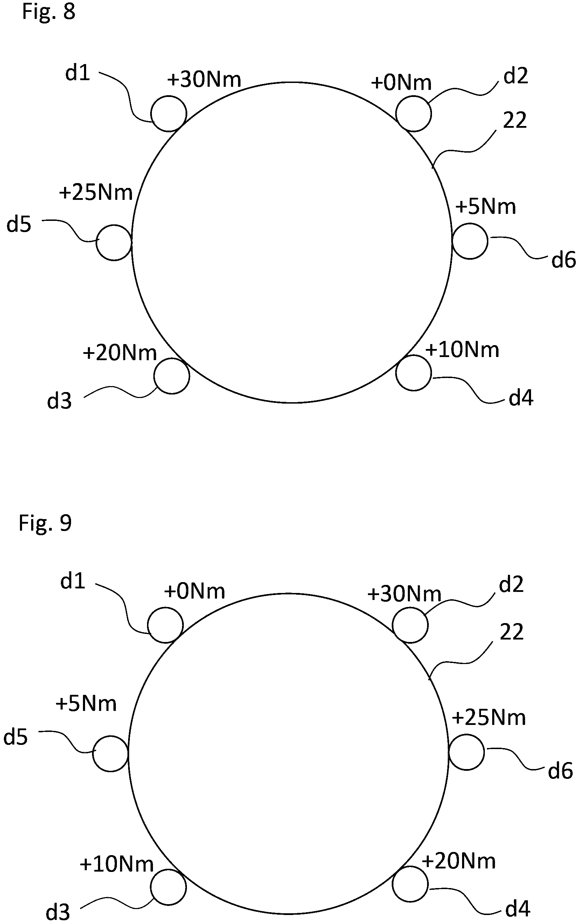

Figure 8 and 9 illustrate similar situations as described in connection with figures 6 and 7. However, in figures 8 and 9, each two drives di are now operated with different torques (the values of the torques exerted by the drives are indicated in figures 8 and 9). That is, the left drives d1, d3 and d5 are no longer operated to exert equal torques and also the right drives d2, d4, d6 are no longer operated to exert equal torques.

In figure 8, a moment in time is shown in which drive d1 is the master drive which always exerts the torque with the largest value.

Figure 9 shows a later moment in time in which drive d2 is operated as the master drive and, accordingly, always exerts the torque with the largest value.

Figure 10 illustrates the operation of a drive control module C. A current converter PC1 determines a current setpoint In_i depending on the operating setpoint OS_i, which is the torque setpoint in this example. A further controller PC2 (e.g. a PI-controller) determines an absolute voltage value U and a phase shift φ depending on the current setpoint In_i and the actual current Ia_i. PWM-generators PWMG generate corresponding PWM signals with which IGBTs (not shown) are energized. The output thereof is three different phases u, v, w with which the drives di are then operated. Moreover, a motor model MM determines, depending on phases u, v, w, the actual current Ia_i. The actual current Ia_i and the current setpoint In_i are used in a negative feedback loop to adapt the voltage value U and the phase shift φ. Furthermore, the fifth information I5 is determined depending on the determined actual current Ia_i.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference sign list:

- 1: first rotor blade
- 2: second rotor blade
- 3: third rotor blade
- 4: nacelle carrier
- 10: rotor
- 11: electric motor
- 12: gearbox
- 13: pinion
- 14: break caliper
- 20: tower
- 21: brake disc
- 22: yaw bearing
- 23: incremental encoder
- 24: incremental encoder
- 30: control system
- 40: nacelle
- 100: wind turbine
- 104: foundation
- 112: rotor hub

- I1: first information
- I2: second information
- I3: third information
- I4: fourth information
- I5: fifth information
- I6: sixth information
- I7: seventh information
- I8: eights information
- I9: ninth information

- OS_i: operating setpoint
- di: drive
- dm: master drive
- Pn: position setpoint
- Pa: actual position
- ΔMn: torque difference setpoint
- ΔMa: actual torque difference
- Rn_i: rotational speed setpoint
- Ra_i: actual rotational speed
- Ma_i: actual torque
- ΔRn: rotational speed offset

- C: motor control module
- PC1: current converter
- PC2: further controller
- U: absolute voltage
- Φ: phase shift
- In_i: current setpoint
- Ia_i: actual current
- PWMG: PWM generator
- u, v, w: phases
- MM: motor model

## Claims

1. Method for operating a wind turbine (100) with a rotatable component (1 to 4) and with at least two drives (di) for rotating the rotatable component (1 to 4) by exerting torques, wherein the method comprises the steps of
- providing first information (I1) which is representative of a position setpoint (Pn) of the rotatable component (1 to 4),
- providing second information (I2) which is representative of an operational variable of the wind turbine (100),
- determining third information (I3) depending on the second information (I2), wherein
- the third information (I3) is representative of which drive (di) is to be operated as a master drive (dm),
- the drive (di) to be operated as the master drive (dm) depends on the operational variable,
- determining operating setpoints (OS_i) for the drives (di) depending on the first information (I1) and the third information (I3)
- such that, when the drives (di) are operated according to the operating setpoints (OS_i), the drives (di) bring or keep the rotatable component (1 to 4) at the position setpoint (Pn) by exerting torques,
- wherein the torques exerted by the drives (di) are at least temporarily different,
- such that the value of the torque exerted by the master drive (dm) is always greater than or at least equal to the value of the torque exerted by the at least one other drive (di).

2. Method according to claim 1, wherein
- the operational variable is at least one of
- an operation time,
- an accumulated load,
- a remaining lifetime,
- the time over which a torque has exceeded a threshold.

3. Method according to claim 2, wherein
- the operational variable is the operation time for which the current master drive (di) has already been operated as the master drive (dm),
- when the operation time reaches a certain value, the third information (I3) is determined such that the master drive (dm) is changed.

4. Method according to any one of the preceding claims, wherein
- the wind turbine (100) comprises at least three drives (di) for rotating the rotatable component (1 to 4),
- the third information (I3) is determined such that the three drives (di) alternatingly become the master drive (dm).

5. Method according to anyone of the preceding claims, further comprising
- providing fourth information (I4) which is representative of a torque difference setpoint (ΔMn) between the torques exerted by the drives (di),
- the operating setpoints (OS_i) are determined also depending on the fourth information (I4) in order to make the torques exerted by the drives (di) to fulfill the torque difference setpoint (ΔMn).

6. Method according to claim 5, further comprising
- providing fifth information (I5) which is representative of the actual torque difference (ΔMa) between the actual torques (Ma_i) exerted by the drives (di),
- the operating setpoints (OS_i) are determined also depending on the fifth information (I5), namely by using a feedback loop with the fourth (I4) and the fifth (I5) information as input information so that the difference between the torque difference setpoint (ΔMn) and the actual torque difference (ΔMa) is minimized.

7. Method according to claim 6, further comprising
- providing sixth information (I6) which is representative of the rotational speed setpoints (Rn_i) of the drives (di) for bringing or keeping the rotatable component (1 to 4) at the position setpoint (Pn),
- providing seventh information (I7) which is representative of the actual rotational speeds (Ra_i) of the drives (di), wherein
- the operating setpoints (OS_i) are determined also depending on the sixth (I6) and the seventh (I7) information, namely by using further feedback loops with the sixth (I6) and the seventh (I7) information as input information so that the differences between the actual rotational speeds (Ra_i) and corresponding rotational speeds setpoints (Rn_i) are minimized.

8. Method according to any one of the preceding claims, further comprising
- providing ninth information (I9) which is representative of the actual position (Pa) of the rotatable component (1 to 4),
- the operating setpoints (OS_i) are determined also depending on the ninth information (I9), namely by using a further feedback loop with the first (I1) and the ninth (I9) information as input information so that the difference between the actual position (Pa) and the position setpoint (Pn) is minimized.

9. Method according to any one of the preceding claims, wherein
- the rotatable component (1 to 4) is a component (4) of a yaw system of the wind turbine (100).

10. Method according to any one of the preceding claims, wherein
- the rotatable component (1 to 4) is a component (1 to 3) of a pitch system of the wind turbine (100).

11. Computer program comprising instructions which, when the program is executed by a control system, cause the control system to carry out the method of any one of claims 1 to 10.

12. Computer-readable data carrier having the computer program of claim 11 stored thereon.

13. Control system (30) comprising means for executing the method according to any one of claims 1 to 10.

14. Control system (30) according to claim 13, wherein
the control system (30) comprises means with the help of which
- the actual torque difference (ΔMa) between the actual torques (Ma_i) exerted by the drives (di) is determinable, and/or
- the actual rotational speeds (Ra_i) of the drives (di) are determinable, and/or
- the actual position (Pa) of the rotatable component (4) is determinable.

15. Wind turbine (100) comprising
- a rotatable component (1 to 4),
- at least two drives (di) for rotating the rotatable component (1 to 4) by exerting torques,
- the control system (40) according to any one of claims 13 or 14, wherein
- the control system (30) is signally connected to the drives (di) in order to enable an operation of the drives (di) according to the operating setpoints (OS_i).
